# FASCICULE DE BREVET EUROPEEN

(11) **EP 1 011 293 B1**
(45) Date de publication et mention de la délivrance du brevet: **16.03.2005**
(21) Numéro de dépôt: 99410177.2
(22) Date de dépôt: 15.12.1999
(51) Int. Cl.: H04Q 11/04, G06F 12/02

(54) **Mémoire tampon associée à plusieurs canaux de communication de données**
Puffer-Speicher für mehrere Datenkommunikationskanäle
Buffer memory for multiple data communication channels

(30) Priorité: 17.12.1998 FR 9816156
(43) Date de publication de la demande: 21.06.2000
(73) Titulaire: STMicroelectronics S.A., 92120 Montrouge (FR)
(72) Inventeur: Moniot, Pascal, 38190 Bernin (FR); Coppola, Marcello, 38430 Moirans (FR)
(74) Mandataire: de Beaumont, Michel

(56) Documents cités:
- WO-A-98/36357
- US-A- 5 828 835
- STANLEY T J ET AL: "A PERFORMANCE ANALYSIS OF AUTOMATICALLY MANAGED TOP OF STACK BUFFERS" PROCEEDINGS OF THE ANNUAL INTERNATIONAL SYMPOSIUM ON COMPUTER ARCHITECTURE, PITTSBURGH, JUNE 2 - 5, 1987, no. SYMP. 14, 2 juin 1987 (1987-06-02), pages 272-281, XP002032257 INSTITUTE OF ELECTRICAL AND ELECTRONICS ENGINEERS ISBN: 0-8186-0776-9

## Description

La présente invention concerne une mémoire tampon destinée à adapter les flux de données échangés entre plusieurs canaux de communication.

Un canal entrant et un ou plusieurs canaux sortants constituant une voie de communication sont généralement traités par intermittence de manière asynchrone, de sorte qu'il arrive souvent qu'un canal entrant fournisse des données alors que le canal sortant n'est pas prêt à les recevoir ou, inversement, que le canal sortant soit prêt à recevoir des données alors que le canal entrant n'en fournit aucune. Il est donc nécessaire d'adapter les flux de données de ces canaux, ce qui est généralement effectué en utilisant une mémoire tampon. La mémoire tampon stocke tout excédent de données que le canal sortant ne peut absorber à un instant donné et fournit les données au canal sortant lorsque celui-ci devient disponible.

Le document WO 98/36357 décrit un procédé pour allouer une mémoire partagée en utilisant des listes liées et une mémoire RAM de gestion pour commander le flux des données vers ou en direction de la mémoire partagée.

Le document Stanley T.J. et al. "A Performance Analysis of Automatically Managed Top of Stack Buffers", Proceedings of the Annual International Symposium on Computer Architecture, Pittsburgh, 2-5 juin 1987, N° Symp. 14, 2 juin 1987, pages 272-281, XP002032257, Institute of Electrical and Electronics Engineers, décrit des algorithmes de gestion de mémoires tampon.

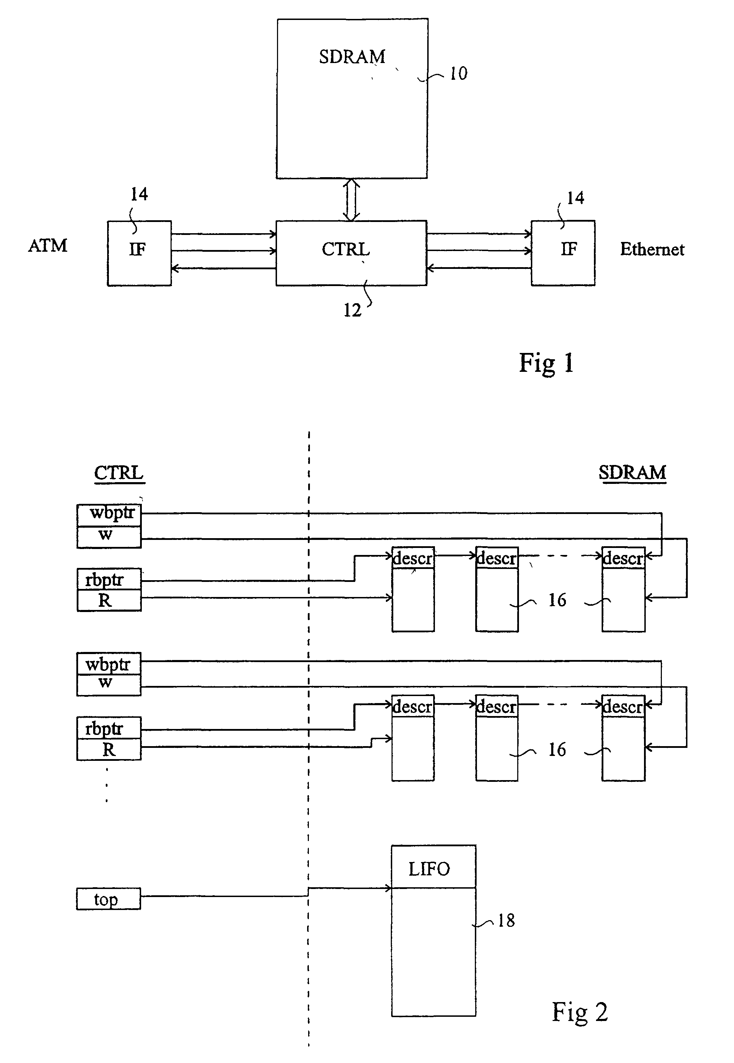

La figure 1 illustre schématiquement une mémoire tampon destinée à adapter les flux de plusieurs canaux entrants à plusieurs canaux sortants respectifs. Il s'agit, par exemple, d'un commutateur multiprotocole destiné à commuter plusieurs connexions ATM sur plusieurs liaisons Ethernet.

La mémoire tampon comprend une mémoire dynamique 10 qui, dans des applications de haut débit, sera généralement une mémoire dynamique synchrone, couramment désignée SDRAM. La mémoire 10 est gérée par un contrôleur mémoire 12 qui traite les données échangées entre les connexions ATM et les liaisons Ethernet par l'intermédiaire d'interfaces adéquates 14.

Une façon immédiate de procéder pour adapter les flux de plusieurs canaux de communication est d'allouer une zone dédiée de taille fixe dans la mémoire SDRAM 10 à chaque canal de communication possible. Cette solution est loin d'être optimale au point de vue de l'utilisation de la mémoire, car une zone dédiée peu sollicitée ne peut être utilisée pour soulager une zone dédiée très sollicitée. Ainsi, les zones dédiées doivent être de taille maximale pour satisfaire les éventuelles sollicitations maximales, bien que cette taille maximale ne sera jamais exploitée la plupart du temps. En outre, dans un commutateur, le nombre de canaux de comnunication ouverts est variable et ils ne sont pratiquement jamais tous utilisés en même temps. Les zones dédiées aux canaux non ouverts restent vides mais inutilisables pour d'autres canaux.

La figure 2 est destinée à illustrer une solution optimisée pour offrir une fonction de mémoire tampon à chacun de plusieurs canaux de communication possibles.

Comme cela est illustré, la mémoire SDRAM 10 est organisée en petits blocs 16 de taille fixe qui sont alloués un par un à chaque canal de communication en fonction des besoins. Plus spécifiquement, à chaque canal de communication est associée une chaîne de blocs liés 16 contenant les données en attente pour le canal sortant correspondant, la chaîne constituant une mémoire tampon de taille variable. Les blocs restés libres et non affectés à des canaux de communication sont répertoriés dans une file de blocs libres 18 également contenue dans la mémoire 10.

Pour gérer cette organisation mémoire, le contrôleur mémoire 12 comprend, pour chaque canal de communication possible, deux pointeurs, wbptr et W, pour le canal entrant, et deux pointeurs, rbptr et R, pour le canal sortant.

Le pointeur wbptr pointe sur le dernier bloc de la chaîne, le bloc qui est en cours de remplissage. Le pointeur W pointe sur l'emplacement d'écriture courant de ce dernier bloc.

Le pointeur rbptr pointe sur le premier bloc de la chaîne, le bloc qui est en cours de vidage. Le pointeur R pointe sur l'emplacement de lecture courant de ce premier bloc.

Par ailleurs, le contrôleur 12 comprend des registres permettant la gestion de la file de blocs libres 18. Cette file 18 peut, comme cela est représenté, être de type dernier-entré-premier-sorti (LIFO), auquel cas un registre suffit, contenant un pointeur "top" vers le sommet de la file 18.

Initialement, la file de blocs libres 18 est pleine, signifiant que tous les blocs de la mémoire SDRAM 10 sont libres et peuvent être alloués à des canaux de communication. Lorsqu'on ouvre un canal de communication, on lui alloue le bloc libre trouvé au sommet de la file 18, indiqué par le pointeur "top". Ce pointeur "top" est décrémenté d'une unité et les pointeurs wbptr et rbptr associés au canal de communication sont tous deux initialisés pour pointer sur le bloc qui vient d'être alloué. A cet instant, les pointeurs W et R pointent sur le premier élément à extraire ou à inscrire dans le bloc.

Après l'écriture d'un mot dans le bloc à l'emplacement indiqué par le pointeur W, le pointeur W est incrémenté d'une unité.

Lorsque le dernier emplacement du bloc courant est atteint par le pointeur W, on alloue au canal de communication un nouveau bloc pris au sommet de la file 18 à l'emplacement indiqué par le pointeur "top". Le pointeur top est décrémenté d'une unité, le pointeur wbptr est mis à jour pour pointer sur le nouveau bloc, le pointeur W est mis à jour pour pointer sur le premier emplacement du nouveau bloc, et un descripteur du bloc qui vient d'être rempli est mis à jour pour assurer le chaînage avec le nouveau bloc.

Ainsi, si les besoins en mémoire tampon pour un canal de communication augmentent, on lui alloue un nombre croissant de blocs qui constituent une chaîne dont la longueur peut croître pour occuper, le cas échéant, la totalité de la mémoire SDRAM ou au moins toute la place laissée libre par des canaux de communication concourants.

Les données à envoyer sur le canal sortant sont lues à l'emplacement indiqué par le pointeur R dans le bloc indiqué par le pointeur rbptr. A chaque lecture d'un mot, le pointeur R est incrémenté d'une unité. Lorsque le pointeur R atteint le dernier emplacement, le pointeur rbptr est mis à jour pour pointer sur le bloc suivant de la chaîne. Le pointeur R est mis à jour pour pointer sur la première donnée à émettre dans ce bloc. Le bloc libéré est inscrit au sommet de la file 18, à l'emplacement top+1. Le pointeur top est alors incrémenté d'une unité.

Ainsi, au fur et à mesure que des blocs sont libérés dans une chaîne associée à un canal de communication, ces blocs deviennent immédiatement disponibles à l'ensemble des canaux de communication.

Un problème qui se pose dans une telle organisation est qu'on a besoin d'un seul accès à la fois à la file de blocs libres 18. Ceci est particulièrement pénalisant en temps d'accès lorsqu'on utilise une mémoire SDRAM, car un accès minimal à une mémoire SDRAM coûte 8 cycles d'horloge dont un seul cycle est nécessaire à la lecture ou à l'écriture d'un mot : trois cycles de précharge, trois cycles d'adressage, un cycle de lecture ou d'écriture, et un cycle d'arrêt. Par ailleurs, il n'est pas concevable d'intégrer la file de blocs libres 18 dans le contrôleur 12, sous la forme d'une mémoire accessible en un seul cycle, car cette file peut être de taille trop importante pour qu'une telle intégration soit raisonnable.

Un objet de la présente invention est de prévoir une organisation d'une mémoire tampon du type susmentionné, permettant d'optimiser les accès à une file de blocs libres contenue dans une mémoire dynamique avec latence d'accès (mémoire SDRAM).

Pour atteindre cet objet, la présente invention prévoit une mémoire tampon destinée à adapter des flux de données de plusieurs canaux entrants à des canaux sortants, comprenant une mémoire dynamique organisée en blocs de taille fixe, et contenant, sous la forme d'une chaîne de blocs liés, des données associées à chaque canal de communication formé d'un couple de canaux entrant et sortant, les blocs inoccupés étant répertoriés dans une file principale de blocs libres contenue dans la mémoire dynamique ; et un contrôleur mémoire prévu pour gérer l'allocation des blocs aux chaînes de blocs liés, et comprenant une mémoire cache contenant une file partielle de blocs libres que le contrôleur utilise exclusivement dans sa gestion, la mémoire cache étant remplie par une salve à partir de la file principale lorsque son niveau de remplissage atteint une limite minimale, et étant vidée par une salve dans la file principale lorsque son niveau de remplissage atteint une limite maximale.

Selon un mode de réalisation de la présente invention, à chaque canal entrant est associé un pointeur vers un bloc d'écriture courant dans lequel sont écrites les données provenant du canal entrant, un bloc précédemment rempli contenant un pointeur vers le bloc d'écriture courant en constituant une chaîne de blocs liés qui ont été consécutivement remplis, et à chaque canal sortant est associé un pointeur vers un bloc de lecture courant constitué du dernier bloc d'une chaîne associée au canal entrant, et dans lequel sont lues les données à fournir par le canal sortant.

Selon un mode de réalisation de la présente invention, la mémoire dynamique est une mémoire dynamique synchrone.

La présente invention vise également un procédé de gestion d'une mémoire tampon du type susmentionné, mis en oeuvre par le contrôleur mémoire, comprenant les étapes suivantes :
- initialement, la file principale de blocs libres étant pleine, transférer ses premiers éléments vers la mémoire cache afin de remplir celle-ci complètement, et mettre à jour des pointeurs d'accès correspondants de la mémoire cache et de la file principale ;
- à chaque allocation d'un bloc libre, le prendre à partir de la mémoire cache en décrémentant son pointeur d'accès ;
- si le pointeur d'accès de la mémoire cache atteint une limite minimale, transférer en une salve les éléments suivants de la file principale vers la mémoire cache afin de remplir celle-ci à un niveau médian compris entre la limite minimale et une limite maximale, et mettre à jour les pointeurs d'accès en conséquence ;
- à chaque libération d'un bloc, l'inscrire dans la mémoire cache en incrémentant son pointeur d'accès ; et
- si le pointeur d'accès de la mémoire cache atteint la limite maximale, vider la mémoire cache par une salve jusqu'au niveau médian dans la file principale en mettant à jour les pointeurs d'accès en conséquence.

Selon un mode de réalisation de la présente invention, le procédé comprend les étapes suivantes :
- si un bloc d'écriture courant est plein, allouer un nouveau bloc pris à partir de la mémoire cache, inscrire dans le bloc d'écriture courant un pointeur vers le nouveau bloc, et faire du nouveau bloc le bloc d'écriture courant en modifiant le pointeur de bloc d'écriture courant, et
- si un bloc de lecture courant est vide, inscrire ce bloc comme libre dans la mémoire cache et mettre à jour le pointeur de bloc de lecture courant pour pointer sur le bloc indiqué par le bloc de lecture courant vide.

Selon un mode de réalisation de la présente invention, la mémoire cache et la file de tampons libres sont organisées sous forme de file de type dernier-entré-premier-sorti.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1, précédemment décrite, représente schématiquement une mémoire tampon destinée à adapter les flux de plusieurs canaux entrants à plusieurs canaux sortants respectifs ;
la figure 2, précédemment décrite, représente une organisation d'une mémoire tampon du type de la figure 1 permettant d'optimiser l'utilisation de la mémoire ;
la figure 3 représente schématiquement une organisation selon l'invention permettant d'optimiser les accès à une file de blocs libres contenue dans une mémoire dynamique, notamment de type SDRAM ; et
les figures 4A à 4C illustrent le fonctionnement de l'organisation de la figure 3.

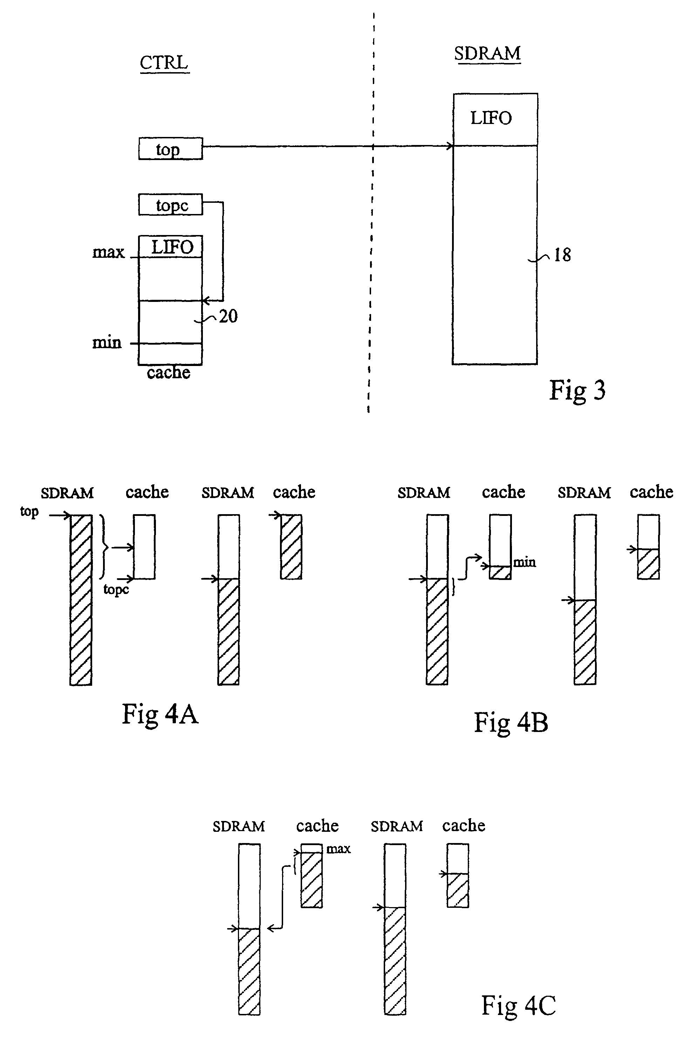

A la figure 3, pour optimiser les accès à la file de blocs libres 18 contenue dans la mémoire SDRAM 10 organisée selon la figure 2, on prévoit dans le contrôleur CTRL 12 une mémoire cache intégrée 20 gérée de manière particulière. Cette mémoire cache 20 est destinée à fournir une image partielle locale du sommet de la file de blocs libres 18. Le contrôleur prend exclusivement dans la mémoire cache 20 les blocs à allouer à un canal de communication et y inscrit exclusivement les blocs qui se libèrent.

Lorsque cette mémoire cache 20 est trop pleine, elle est partiellement vidée en une seule salve au sommet de la file 18. Inversement, lorsque la mémoire cache 20 est pratiquement vide, elle est partiellement remplie en une seule salve à partir du sommet de la file 18. Ainsi, chaque accès à la file de blocs libres 18 s'effectue en une salve, ce qui réduit d'autant plus le nombre moyen de cycles d'un accès à un mot que la taille de la salve est grande. Bien entendu, la taille des salves dépend de la taille de la mémoire cache utilisée.

En pratique, la mémoire cache 20 est de faible taille, compatible avec une intégration dans le contrôleur mémoire 12. Généralement, de telles mémoires intégrées offrent des accès d'un seul cycle par mot, ce qui augmente les performances d'un facteur 10 par rapport au cas où l'on devait accéder un par un aux mots de la file 18 en mémoire SDRAM.

En outre, la mémoire cache 20 permet de diminuer considérablement le nombre d'accès à effectuer à la file 18. En effet, pendant la durée d'ouverture d'un canal de communication, aussitôt qu'un bloc est libéré, il peut être alloué au même canal de communication. Ceci vaut également pour plusieurs canaux de communication ouverts en même temps : lorsque l'un des canaux libère un bloc, il peut aussitôt être affecté à l'un quelconque des canaux, y compris celui qui vient de le libérer. En d'autres termes, on fait tourner les mêmes blocs dans la mémoire cache dont le niveau de remplissage oscille de ce fait autour d'une valeur moyenne fixe. En fait, on a besoin d'alimenter ou de vider la mémoire cache seulement quand intervient un changement de configuration lié au nombre de connexions ou au débit.

Comme cela est illustré, la mémoire cache 20 est de préférence de type dernier-entré-premier-sorti (LIFO) . Pour gérer ce type de mémoire cache, le contrôleur 12 comprend un registre contenant un pointeur "topc" vers le sommet de la mémoire cache 20. Lorsque le pointeur topc atteint une limite maximale max, on déclenche un transfert par salve d'une partie du contenu de la mémoire cache 20 vers la file 18. Dans le cas contraire, si le pointeur topc atteint une limite minimale min, on déclenche un transfert par salve d'une partie du contenu de la file 18 vers la mémoire cache.

Les figures 4A à 4C sont destinées à illustrer plus en détail ce fonctionnement.

La figure 4A illustre une initialisation du système, par exemple à la mise sous tension. La file de blocs libres 18 est pleine et la mémoire cache 20 est vide. Le pointeur top de la file principale est à sa valeur maximale tandis que le pointeur topc de la mémoire cache est à sa valeur minimale. La mémoire cache est immédiatement remplie en totalité, en une salve, par les éléments du sommet de la file principale 18. Le pointeur top de la file 18 est décrémenté de la taille de la salve tandis que le pointeur topc de la mémoire cache est mis à sa valeur maximale.

A partir de cet instant, des canaux de communication peuvent s'ouvrir. A chaque fois qu'on a besoin d'un bloc, celui-ci est pris dans la mémoire cache et le pointeur topc est décrémenté d'une unité. L'allocation des blocs aux canaux de communication s'effectue de la manière décrite en relation avec la figure 2.

A la figure 4B, le besoin en blocs est si important que le pointeur topc de la mémoire cache atteint la limite minimale. On déclenche alors un transfert par salve dans la mémoire cache des éléments du sommet de la file 18 afin de remplir la mémoire cache, par exemple à moitié. Le pointeur top de la file principale 18 est décrémenté de la taille de la salve tandis que le pointeur topc de la mémoire cache est incrémenté de la taille de la salve.

Lorsqu'un canal de communication libère un bloc, celui-ci est immédiatement inscrit au sommet de la mémoire cache, à l'emplacement topc + 1, et le pointeur topc est incrémenté d'une unité. La libération des blocs s'effectue de la manière décrite en relation avec la figure 2.

A la figure 4C, tellement de blocs se sont libérés que le pointeur topc atteint la limite maximale. On déclenche alors un transfert par salve des éléments du sommet de la mémoire cache vers le sommet de la file 18. La taille de la salve est choisie, par exemple, pour que la mémoire cache soit remplie à moitié après le transfert. Le pointeur topc de la mémoire cache est décrémenté de la taille de la salve tandis que le pointeur top de la file 18 est incrémenté de la taille de la salve.

Comme on l'a précédemment indiqué, en fonctionnement établi, le nombre de canaux de communication ouverts varie peu ou lentement autour d'une valeur moyenne de sorte que les limites minimale et maximale sont rarement atteintes. Il en résulte des transferts peu fréquents entre la mémoire cache et la file 18 en mémoire SDRAM.

A titre d'exemple, pour un commutateur pouvant gérer 1024 canaux de communication avec un débit bidirectionnel global maximal de 155 mégabits par seconde, on utilise une mémoire SDRAM organisée en blocs de 0,5 kilooctets. On utilise alors une mémoire cache de 32 éléments, les limites maximale et minimale étant fixées, par exemple, à 28 et à 4 emplacements, respectivement. On utilise des salves de 8 mots pour alimenter ou vider la mémoire cache lorsque ces limites sont atteintes.

De nombreuses variantes et modifications de la présente invention apparaîtront à l'homme du métier. Par exemple, on a décrit une mémoire cache et une file de blocs libres organisées en files de type dernier-entré-premier-sorti (LIFO) . On préfère une telle organisation car elle nécessite la gestion d'un seul pointeur. Par contre, ces files peuvent être remplacées par des files de type premier-entré-premier-sorti (FIFO), auquel cas il faut gérer deux pointeurs, l'un pointant sur l'emplacement d'écriture courant et l'autre pointant sur l'emplacement de lecture courant.

## Revendications

1. Mémoire tampon destinée à adapter des flux de données de plusieurs canaux entrants à des canaux sortants, comprenant :
- une mémoire dynamique (10) organisée en blocs (16) de taille fixe, et contenant, sous la forme d'une chaîne de blocs liés, des données associées à chaque canal de communication formé d'un couple de canaux entrant et sortant, les blocs inoccupés étant répertoriés dans une file principale de blocs libres (18) contenue dans la mémoire dynamique ; et
- un contrôleur mémoire (12) prévu pour gérer l'allocation des blocs aux chaînes de blocs liés, **caractérisée en ce que** le contrôleur mémoire comprend une mémoire cache (20) contenant une file partielle de blocs libres que le contrôleur utilise exclusivement dans sa gestion, la mémoire cache étant remplie par une salve à partir de la file principale lorsque son niveau de remplissage atteint une limite minimale, et étant vidée par une salve dans la file principale lorsque son niveau de remplissage atteint une limite maximale.

2. Mémoire tampon selon la revendication 1, **caractérisée en ce que** :
- à chaque canal entrant est associé un pointeur (wbptr) vers un bloc d'écriture courant dans lequel sont écrites les données provenant du canal entrant, un bloc précédemment rempli contenant un pointeur (descr) vers le bloc d'écriture courant en constituant une chaîne de blocs liés qui ont été consécutivement remplis, et
- à chaque canal sortant est associé un pointeur (rbptr) vers un bloc de lecture courant constitué du dernier bloc d'une chaîne associée au canal entrant, et dans lequel sont lues les données à fournir par le canal sortant.

3. Mémoire tampon selon la revendication 1, **caractérisée en ce que** la mémoire dynamique (10) est une mémoire dynamique synchrone.

4. Procédé de gestion d'une mémoire tampon selon l'une quelconque des revendications 1 à 3, mis en oeuvre par le contrôleur mémoire (12), comprenant les étapes suivantes :
- initialement, la file principale de blocs libres (18) étant pleine, transférer ses premiers éléments vers la mémoire cache (20) afin de remplir celle-ci complètement, et mettre à jour des pointeurs d'accès correspondants de la mémoire cache et de la file principale ;
- à chaque allocation d'un bloc libre, le prendre à partir de la mémoire cache en décrémentant son pointeur d'accès ;
- si le pointeur d'accès de la mémoire cache atteint une limite minimale, transférer en une salve les éléments suivants de la file principale vers la mémoire cache afin de remplir celle-ci à un niveau médian compris entre la limite minimale et une limite maximale, et mettre à jour les pointeurs d'accès en conséquence ;
- à chaque libération d'un bloc, l'inscrire dans la mémoire cache en incrémentant son pointeur d'accès ; et
- si le pointeur d'accès de la mémoire cache atteint la limite maximale, vider la mémoire cache par une salve jusqu'au niveau médian dans la file principale en mettant à jour les pointeurs d'accès en conséquence.

5. Procédé de gestion d'une mémoire tampon selon la revendication 2, **caractérisé en ce qu'**il comprend les étapes suivantes :
- si un bloc d'écriture courant est plein, allouer un nouveau bloc à partir de la mémoire cache, inscrire dans le bloc d'écriture courant un pointeur (descr) vers le nouveau bloc, et faire du nouveau bloc le bloc d'écriture courant en modifiant le pointeur de bloc d'écriture courant (wbptr), et
- si un bloc de lecture courant est vide, inscrire ce bloc comme libre dans la mémoire cache et mettre à jour le pointeur de bloc de lecture courant (rbptr) pour pointer sur le bloc indiqué par le bloc de lecture courant vide.

6. Procédé ou dispositif selon l'une quelconque des revendications précédentes, **caractérisé en ce que** la mémoire cache (20) et la file de tampons libres sont organisées sous forme de file de type dernier-entré-premier-sorti.

## Claims

1. A buffer for adapting data flows from several input channels to output channels, including:
- a DRAM (10) organized in blocks (16) of fixed size, and containing, in the form of a chain of linked blocks, data associated with each communication channel formed of a pair of input and output channels, the unoccupied blocks being listed in a main queue of free blocks (18) contained in the DRAM; and
- a memory controller (12) provided to manage the assignment of the blocks to the chains of linked blocks,
**characterized in that** the memory controller includes a cache memory (20) containing a partial queue of free blocks that the controller exclusively uses in its management, the cache memory being filled by a burst from the main queue when its filling level reaches a minimum limit, and being emptied by a burst into the main queue when its filling level reaches a maximum value.

2. The buffer of claim 1, wherein:
- to each input channel is associated a pointer (wbptr) to a current write block in which are written the data coming from the input channel, a previously-filled block containing a pointer (descr) to the current write block by forming a chain of linked blocks which have been consecutively filled, and
- to each output channel is associated a pointer (rbptr) to a current read block formed of the last block of a chain associated with the input channel, and in which are read the data to be provided by the output channel.

3. The buffer of claim 1, wherein the DRAM (10) is a SDRAM.

4. A method of managing the buffer of any of claims 1 to 3, implemented by the memory controller (12), including the steps of:
- initially, the main queue of free blocks (18) being full, transferring its first elements to the cache memory (20) to completely fill said memory, and updating corresponding access pointers of the cache memory and of the main queue;
- upon each assignment of a free block, taking it from the cache memory while decrementing its access pointer;
- if the access pointer of the cache memory reaches a minimum limit, transferring in a burst the next elements of the main queue to the cache memory, to fill said memory to a median level ranging between the minimum limit and a maximum limit, and updating the access pointers accordingly;
- upon each freeing of a block, inscribing it in the cache memory by incrementing its access pointer;
- if the access pointer of the cache memory reaches the maximum limit, emptying the cache memory by a burst to the median level into the main queue while updating the access pointers accordingly.

5. A method of managing the buffer of claim 2, including the steps of:
- if a current write block is full, dedicating a new block taken from the cache memory, inscribing in the current write block a pointer (descr) to the new block, and making the new block the current write block by modifying the current write block pointer (wbptr), and
- if a current read block is empty, inscribing this block as free in the cache memory and updating the current read block pointer (rbptr) to point on the block indicated by the empty current read block.

6. The method or device of any of the preceding claims, wherein the cache memory (20) and the free buffer queue are organized in the form of a LIFO queue.

## Patentansprüche

1. Ein Puffer bzw. Zwischenspeicher zum Anpassen von Datenströmen von mehreren Eingabekanälen zu Ausgabekanälen, wobei der Puffer Folgendes aufweist:
ein DRAM (10), der in Blöcken (16) mit festgelegter Größe organisiert ist und Daten in der Form einer Kette von verknüpften Blöcken enthält, die einem Kommunikationskanal, der durch ein Paar von Eingabe- und Ausgabekanälen gebildet wird, zugeordnet sind, wobei die nicht besetzten Blöcke in einer Hauptwarteschlange von freien Blöcken (18), enthalten in dem DRAM, aufgelistet sind; und
ein Speichercontroller (12), der vorgesehen wird, die Zuordnung der Blöcke in den Ketten von verknüpften Blöcken zu regeln bzw. zu steuern,
**dadurch gekennzeichnet, dass** der Speichercontroller einen Cash-Speicher (20) aufweist, der eine Teilwarteschlange von freien Blöcken, die der Controller exklusiv für seine Steuerung verwendet, enthält, wobei der Cash-Speicher durch einen Burst von der Hauptwarteschlange gefüllt wird, wenn sein Füllgrad ein Minimallimit erreicht, und der entleert wird durch einen Burst in die Hauptwarteschlange, wenn sein Füllpegel einen Maximalwert erreicht.

2. Der Puffer gemäß Anspruch 1, wobei
- jedem Eingabekanal Folgendes zugeordnet ist: ein Zeiger (wbptr) auf einen momentanen Schreibblock, in dem die Daten, die von dem Eingabekanal kommen, eingeschrieben werden, ein zuvor gefüllter Block, der einen Zeiger (descr) auf den momentanen Schreibblock enthält, und zwar durch Bilden einer Kette von verknüpften Blöcken, die aufeinander folgend gefüllt wurden, und
- jedem Ausgabekanal Folgendes zugeordnet ist: ein Zeiger (rbptr) auf einen momentanen Leseblock, der durch den letzten Block einer Kette, die dem Eingabekanal zugeordnet ist, gebildet wird, und in den die Daten, die auf dem Ausgabekanal vorgesehen werden sollen, eingelesen werden.

3. Puffer nach Anspruch 1, wobei der DRAM (10) ein SDRAM ist.

4. Ein Verfahren zum Regeln bzw. Führen des Puffers nach einem der Ansprüche 1 bis 3, und zwar implementiert durch den Speichercontroller (12), wobei das Verfahren die folgenden Schritte aufweist:
- ein zu Beginn, wobei die Hauptwarteschlange der freien Blöcke (18) voll ist, Transferrieren ihrer ersten Elemente zu dem Cash-Speicher (20), um den Speicher vollständig zu füllen, und Aktualisieren entsprechender Zugriffszeiger auf den Cash-Speicher und auf die Hauptwarteschlange;
- nach jeder Zuweisung eines freien Blocks Entnehmen des freien Blocks von dem Cash-Speicher, während sein Zugriffszeiger dekrementiert wird;
- wenn der Zugriffszeiger des Cashspeichers ein Minimallimit erreicht, Transferrieren der nächsten Elemente der Hauptwarteschlange in den Cash-Speicher in einem Burst, um den Speicher zu einem Median- bzw. mittleren Grad, der sich zwischen dem Minimallimit und einem Maximallimit befindet, und entsprechendes Aktualisieren der Zugriffszeiger;
- bei jedem Freigeben eines Blocks Einschreiben dieses in den Cash-Speicher durch Inkrementieren seines Zugriffszeigers;
- wenn der Zugriffszeiger des Cash-Speichers das Maximallimit erreicht, Entleeren des Cash-Speichers auf einen mittleren Grad bzw. Pegel in die Hauptwarteschlange durch einen Burst, während die Zugriffszeiger entsprechend aktualisiert werden.

5. Ein Verfahren zum Steuern des Puffers nach Anspruch 2, wobei das Verfahren die folgenden Schritte aufweist:
- wenn ein momentaner Schreibblock voll ist, Aufwenden bzw. Zuweisen eines neuen Blockes, der von dem Cash-Speicher genommen wird, Einschreiben in den momentanen Schreibblock eines Zeigers (descr) auf den neuen Block und Definieren des neuen Blocks als den momentanen Schreibblock durch Modifizieren des momentanen Schreibblockzeigers (wbptr), und
- wenn ein momentaner Leseblock leer ist, Einschreiben dieses Blockes als frei in dem Cash-Speicher und Aktualisieren des momentanen Leseblockzeigers (rbptr) damit dieser auf den Block, der durch den leeren momentanen Leseblock angegeben wird, zeigt.

6. Verfahren oder Vorrichtung nach einem der vorhergehenden Ansprüche, wobei der Cash-Speicher (20) und die Frei-Puffer-Warteschlange in der Form einer LIFO-Warteschlange organisiert sind.
